# EUROPÄISCHE PATENTSCHRIFT

(11) **EP 2 212 052 B1**
(45) Veröffentlichungstag und Bekanntmachung des Hinweises auf die Patenterteilung: **15.06.2011**
(21) Anmeldenummer: 08784569.9
(22) Anmeldetag: 27.06.2008
(51) Int. Cl.: B23K 26/28, B23K 37/04, F28D 1/03, F28D 9/00, B23K 26/24, B23K 101/14

(54) **VERFAHREN ZUM VERBINDEN VON MINDESTENS ZWEI WÄRMETAUSCHERPLATTEN**
METHOD FOR CONNECTING AT LEAST TWO HEAT EXCHANGER PLATES
PROCÉDÉ D'ASSEMBLAGE D'AU MOINS DEUX PLAQUES D'ÉCHANGEUR DE CHALEUR

(30) Priorität: 26.11.2007 DE 102007056717
(43) Veröffentlichungstag der Anmeldung: 04.08.2010
(73) Patentinhaber: Gesmex Gmbh, 19061 Schwerin (DE)
(72) Erfinder: HALLMANN, Mike, 21521 Dassendorf (DE)
(74) Vertreter: Grünecker, Kinkeldey, Stockmair & Schwanhäusser Anwaltssozietät
(86) Internationale Anmeldenummer: PCT/EP2008/005287
(87) Internationale Veröffentlichungsnummer: WO 2009/068119

(56) Entgegenhaltungen:
- WO-A-99/67041
- FR-A- 2 791 291

## Beschreibung

Die Erfindung betrifft ein Verfahren gemäß dem Oberbegriff des Anspruchs 1. Dokument WO 99/67041 A offenbart ein solches Verfahren.

Üblicherweise werden diese Plattenpakte so hergestellt, dass die Wärmetauscherplatten nach einem Umformprozess auf den gewünschten äußeren Durchmesser gebracht und Durchgangslöcher mit dem gewünschten Enddurchmesser in die Wärmetauscherplatten geschnitten werden. Jeweils zwei der Wärmetauscherplatten werden dann entlang der Ränder dieser Durchgangslöcher miteinander verschweißt und die so entstandenen Plattenpaare anschließend an den Rändern der Wärmetauscherplatten miteinander verschweißt. Dieses Plattenpaket wird dann in einen Druckbehälter eingesetzt, wobei ein Medium durch den Druckbehälter und ein anderes Medium durch das Plattenpaket strömt. Auf diese Weise wird ein Wärmetauscher mit einer großen Wärmeübertragungsfläche und hoher Druckfestigkeit realisiert.

Nachteilig an diesem Verfahren ist allerdings, dass die Schweißnähte an den Durchgangslöchern und in den Außenbereichen der Wärmetauscherplatten in schmalen Stegen durchgeführt werden müssen, wodurch das Schweißen und Aufspannen erschwert wird.

Es ist daher die Aufgabe der vorliegenden Erfindung, ein Verfahren zu ermöglichen, mit dem die Aufspann- und Schweißschritte erleichtert werden.

Hierzu ist erfindungsgemäß ein Verfahren gemäß dem Anspruch 1 vorgesehen.

Die Durchgangslöcher werden also erst nach dem Verweißen der Wärmetauscherplatten miteinander in die Wärmetauscherplatten geschnitten. Zum Verschweißen werden die Wärmetauscherplatten so aufeinander gelegt, dass die Bereiche, in denen die Durchgangslöcher angebracht werden sollen, aufeinander liegen. Das Zusammenspannen der Wärmetauscherplatten miteinander erfolgt in der Nähe des Rands der späteren Durchgangslöcher. Hierbei ist aber nicht die genaue Position wichtig, sondern vielmehr, dass die beiden Wärmetauscherplatten in dem Bereich, in dem geschweißt wird, gut aufeinander liegen. Das Zusammenspannen muss also nicht unmittelbar benachbart zum Rand des späteren Durchgangsloch erfolgen, eventuell ist auch ein Verspannen am Außenrand der Wärmetauscherplatten möglich. Da die Durchgangslöcher noch nicht ausgeschnitten wurden, ist im Bereich des Rands der späteren Durchgangslöcher allerdings noch viel Material, so dass die Wärmetauscherplatten dort gut zusammengespannt und gehalten werden können. Zudem ist ausreichend Platz für die Schweißnähte vorhanden. Die Bleche der beiden Wärmetauscherplatten überlappen sich, es wird also eine Überlappschweißnaht erzeugt. Daher kann eine Schweißnaht mit hoher Festigkeit und guter Qualität erzeugt werden. Vorzugsweise sind die Durchgangslöcher kreisförmig, sie können aber auch eine beliebige andere Form aufweisen.

In einer vorteilhaften Verfahrensvariante kann vorgesehen werden, dass jede Wärmetauscherplatte ein innerhalb des Rands des späteren Durchgangslochs angeordnetes Spannloch aufweist, das nach dem Verschweißen der Wärmetauscherplatten miteinander zu dem Durchgangsloch erweitert wird. Durch dieses Spannloch wird das Ausrichten der Wärmetauscherplatten zueinander sowie das anschließende Zusammenspannen erleichtert. Das Erweitern bzw. Ausschneiden der Durchgangslöcher kann mit verschiedenen Verfahren, beispielsweise Stanzen oder auch Laserschneiden, erfolgen.

Zweckmäßigerweise kann vorgesehen werden, dass in jede Wärmetauscherplatte mindestens zwei Durchgangslöcher geschnitten werden. Das fertige Plattenpaket weist dann zwei Durchgänge, also je einen Einlass und einen Auslass auf, so dass das in dem Plattenpaket geführte Medium durch alle Platten in die gleiche Richtung strömt und somit ein Gegenstromwärmetauscher möglich ist.

Eine besonders vorteilhafte Variante des Verfahrens sieht vor, dass die jeweils zwei Wärmetauscherplatten mittels zwei benachbarter, den Rand des späteren Durchgangslochs markierender umlaufender Schweißnähte miteinander verschweißt werden. Die Schweißnähte können daher schmäler ausgebildet werden, wodurch der Wärmeeintrag in die Wärmetauscherplatten verringert wird. Dies ist vor allem bei Wärmetauscherplatten aus sehr dünnen Blechen vorteilhaft, um Wärmeverzug zu vermeiden.

Es hat sich ferner als sehr zweckmäßig erwiesen, wenn die beiden Schweißnähte so ausgeführt werden, dass sie sich zumindest teilweise überlappen. Der Durchmesser der äußeren Schweißnaht ist daher nur geringfügig größer als der Durchmesser der inneren Schweißnaht und der Überlappungsbereich der Schweißnähte ist so ausgebildet, dass sich beide Schweißnähte in diesem Bereich auch in die untere Wärmetauscherplatte erstrecken. Auf diese Weise ist die Ausbildung einer breiten Schweißnaht mit guter Festigkeit bei geringem Wärmeeintrag möglich.

Bevorzugterweise wird jedes Durchgangsloch in dem Bereich der umlaufenden Schweißnaht in die Wärmetauscherplatte geschnitten, in dem sich die Schweißnaht in beide Wärmetauscherplatten erstreckt. Der Schnitt verläuft also in dem Bereich, in dem kein Spalt zwischen den beiden Wärmetauscherplatten existiert. Dies ist für ein Laserschneidverfahren wichtig, da bei diesem Verfahren nicht durch einen Luftspalt geschnitten werden kann. Ferner weist das Durchgangsloch dann eine durchgehende Wandung auf. Das durch das Plattenpaket strömende Medium kann dadurch nicht in einen Spalt zwischen den Wärmetauscherplatten eindringen. Dies ist vor allem bei aggressiven Medien vorteilhaft, die sonst eventuell zu Korrosion führen könnten.

In einer weiteren günstigen Verfahrensvariante kann vorgesehen werden, dass die entstandenen Wärmetauscherplattenpaare entlang des äußeren Rands der Wärmetauscherplatten mit einer Schweißnaht miteinander verschweißt werden, wobei die äußeren Ränder der Wärmetauscherplatten aufgebogen sind, so dass zwischen den äußeren Rändern von je zwei Wärmetauscherplatten eine V-förmige Nut entsteht, die sich anschließenden Bereiche der Wärmetauscherplatten flach aufeinander liegen und die Schweißnaht in der V-förmigen Nut verläuft. Es entsteht somit ein vollverschweißtes, gasdichtes Plattenpaket. Die Schweißnaht ist eine Bördelnaht, wobei die Schweißnaht in der V-förmigen Nut verläuft. Durch diesen Nahtverlauf in der Nut ist ein leichtes Zentrieren des Schweißkopfs und eine gute Nahtkontrolle möglich. Dieser Verfahrensschritt ist besonders vorteilhaft, wenn die Wärmetauscherplattenpaare nach den vorstehend beschriebenen Verfahrensschritten hergestellt wurden, indem jeweils zwei Wärmetauscherplatten im Randbereich der Durchgangslöcher miteinander verschweißt wurden, bevor die Durchgangslöcher geschnitten wurden. Es ist aber auch möglich, die Wärmetauscherplattenpaare auf andere Art und Weise herzustellen und diese Wärmetauscherplattenpaare dann an der V-förmigen Nut in den Rändern zu verschweißen. Für diesen Verfahrensschritt wird daher gesondert Schutz beansprucht.

Vorzugsweise weisen die Wärmetauscherplatten Prägungen auf und die äußeren Ränder der Wärmetauscherplatten werden bei dem Aufbringen der Prägungen aufgebogen. Durch die Prägungen kann eine turbulente Strömung in den Wärmetauscherplatten erzeugt werden, dadurch wird eine bessere Wärmeübertragung möglich. Durch das gleichzeitige Aufbringen der Prägungen und Aufbiegen der äußeren Ränder der Wärmetauscherplatten kann ein Arbeitsschritt eingespart werden.

Es hat sich ferner als vorteilhaft erwiesen, wenn die Schweißnähte an den Wärmetauscherplatten durch Laserschweißen erzeugt werden. Durch Laserschweißen kann eine sehr zuverlässige und dauerhaft sichere Verbindung der Wärmetauscherplatten miteinander erreicht werden. Durch das Laserschweißverfahren wird nur eine geringe Wärmebelastung auf die Wärmetauscherplatten ausgeübt, wodurch Wärmeverzug vermieden wird. Im Bereich der Durchgangslöcher, also bei der Überlappnaht, entspricht die Tiefe der Schweißnaht in etwa der doppelten Plattenstärke einer Wärmetauscherplatte. An den Rändern der Wärmetauscherplatten entspricht die Tiefe der Schweißnaht, also die radiale Erstreckung der Bördelnaht, in etwa dem Vierfachen der Plattenstärke einer Wärmetauscherplatte.

Im Folgenden werden Ausführungsformen der Erfindung anhand einer Zeichnung näher erläutert. Es zeigen:
- Fig. 1: Verschweißen von zwei Wärmetauscherplatten in den Bereichen zum Ein- bringen der Durchgangslöcher,
- Fig. 2: vergrößerte Ansicht des Ausschnitts II aus Fig. 1, der die Schweißnaht zeigt,
- Fig. 3: Schneiden der Durchgangslöcher in die Wärmetauscherplatten,
- Fig.4: Verschweißen der Wärmetauscherplattenpaare an ihren äußeren Rändern und
- Fig. 5: vergrößerte Darstellung der Schweißvorrichtung aus Fig. 4.

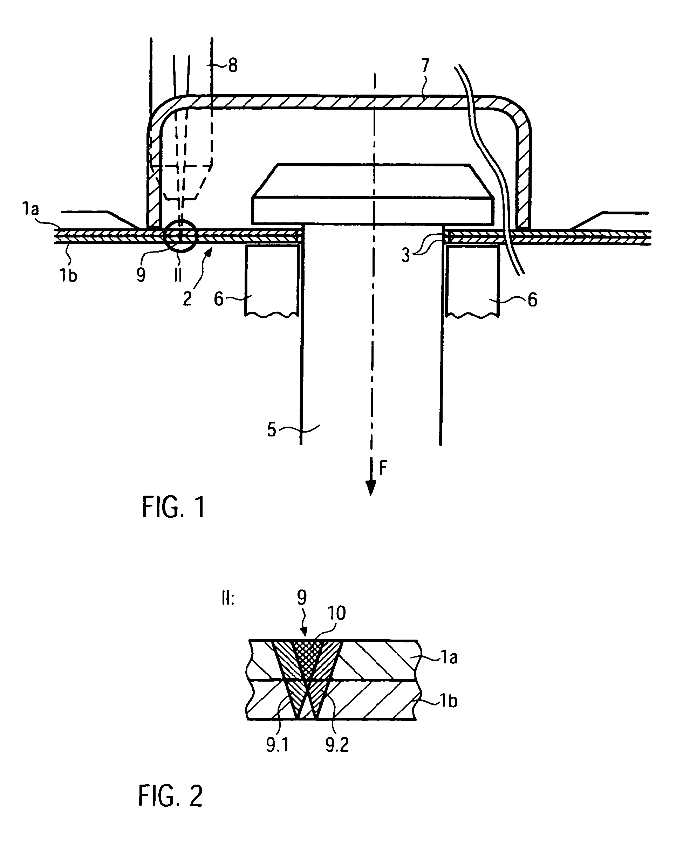

Fig. 1 zeigt das Verschweißen von zwei Wärmetauscherplatten 1 a, 1b in der Nähe des Rands 2 der späteren Durchgangslöcher. Die zwei Wärmetauscherplatten 1a, 1b liegen zumindest in dem Bereich aufeinander, in den später die Durchgangslöcher geschnitten werden, und werden in der Nähe des Rands 2 der späteren Durchgangslöcher miteinander verspannt. Dazu weist jede der Wärmetauscherplatten 1a, 1b ein Spannloch 3 auf, dessen Durchmesser kleiner ist als der spätere endgültige Durchmesser der Durchgangslöcher und das innerhalb der späteren Durchgangslöcher angeordnet ist. Durch jedes der Spannlöcher 3 wird ein Zentrierstift 5 geführt, der einen Kopf aufweist. Der Zentrierstift 5 wird mit der Kraft F nach unten gezogen und presst die beiden Wärmetauscherplatten 1a, 1 b in der Nähe des Rands 2 der späteren Durchgangslöcher aneinander und auf eine Spannbacke 6. Die Spannlöcher 3 sind vorzugsweise kreisförmig. Dies ist aber nicht unbedingt notwendig. Es ist auch denkbar, dass die Spannlöcher eine andere Form haben und beispielsweise rechteckig sind.

Die Wärmetauscherplatten 1a, 1b müssen nicht zwangsläufig ein Spannloch aufweisen. Es ist auch denkbar, dass die Wärmetauscherplatten 1a, 1b ohne Spannloch gegeneinander verspannt werden oder dass die Verspannung nicht in unmittelbarer Nähe des Rands der späteren Durchgangslöcher stattfindet, beispielsweise durch einen im Randbereich der Wärmetauscherplatten angeordneten Distanzring. Wichtig ist, dass die Wärmetauscherplatten im Bereich der Schweißnaht spaltfrei aufeinander liegen.

Zum Verschweißen der Wärmetauscherplatten 1 a, 1b miteinander wird eine Schutzglocke 7 auf die obere der beiden Wärmetauscherplatten 1a, 1b aufgebracht. Über die Schutzglocke 7 wird Schutzgas vor, während und nach dem Schweißprozess zugeführt. In der Schutzglocke 7 ist ein Schweißkopf 8 angeordnet, der die beiden Wärmetauscherplatten 1a, 1b miteinander verschweißt. Dazu wird der Schweißkopf 8 auf einer Kreisbahn horizontal verfahren, so dass eine kreisförmige Schweißnaht 9 entsteht. Der Durchmesser der kreisförmigen Schweißnaht 9 ist mindestens so groß wie der Durchmesser der noch zu fertigenden Durchgangslöcher 4. Die Schweißnaht 9 markiert also den Rand 2 des späteren Durchgangslochs. Weder die Durchgangslöcher noch die Schweißnaht müssen zwangsläufig kreisförmig sein, es sind auch andere Formen, beispielsweise Rechtecke, denkbar.

Vorzugsweise werden in jede Wärmetauscherplatte 1 a, 1b zwei Durchgangslöcher geschnitten. Es können dann zwei Spannlöcher 3 vorgesehen werden, in die Zentrierstifte 5 eingeführt werden, durch die die Wärmetauscherplatten 1a, 1 b mechanisch positioniert werden. Das Verspannen der Wärmetauscherplatten 1a, 1 b erfolgt vorzugsweise pneumatisch. Für die Herstellung einer mehrzügigen Strömungsführung innerhalb des Plattenpakets kann jedoch auch nur ein bzw. wechselseitig ein Durchgangsloch in jede Wärmetauscherplatte geschnitten werden.

In Fig. 2 ist die Schweißnaht 9 in Vergrößerung dargestellt. Wie gezeigt, liegen die Wärmetauscherplatten 1a, 1 b flach aufeinander. Die Schweißnaht 9 erstreckt sich durch beide Wärmetauscherplatten 1a, 1 b und ist daher eine Überlappnaht. Die Schweißnaht 9 ist durch zwei nebeneinander angeordnete schmale Schweißnähte 9.1, 9.2 gebildet, die in dem Bereich 10 ineinander übergehen. Die Tiefe der Schweißnaht 9, bzw. der Bereich der Schweißnaht 9, in dem das Material der beiden Wärmetauscherplatten 1 a, 1b miteinander verschmolzen ist, entspricht mindestens dem zweifachen der Plattenstärke einer Wärmetauscherplatte 1a, 1b.

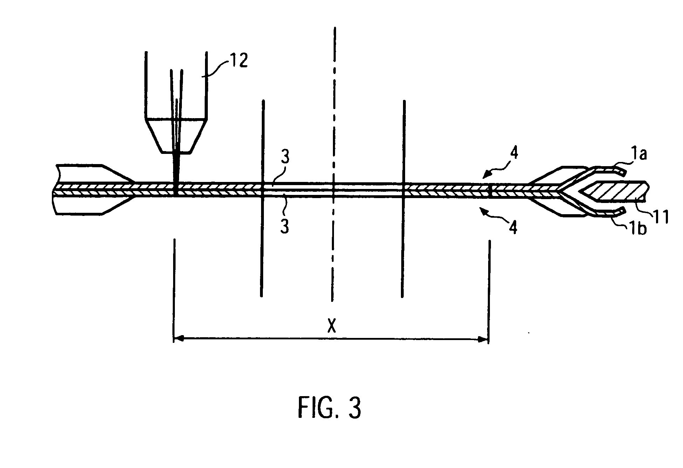

Nach dem Verschweißen der beiden Wärmetauscherplatten 1 a, 1 b miteinander wird die Schutzglocke 7 entfernt und es werden die Durchgangslöcher 4 in die Wärmetauscherplatten 1a, 1b geschnitten. Wie in Fig. 3 dargestellt, wird dazu ein Laserschneidkopf 12 verwendet. Die Wärmetauscherplatten 1 a, 1b werden dabei über einen Distanzring 11 gehalten, der in einem Außenbereich der Wärmetauscherplatten 1a, 1 b angeordnet ist. Dieser Distanzring 11 dient sowohl zur Positionierung der Wärmetauscherplatten 1a, 1b als auch zur Ableitung der bei dem Schweiß- bzw. Schneidprozess entstehenden Wärme und kann auch bereits im vorangehenden Schweißschritt zur Positionierung eingesetzt werden. Der Laserschneidkopf 12 schneidet die Durchgangslöcher 4 auf einen Durchmesser X aus. Der Durchmesser X ist so gewählt, dass der Laserschneidkopf 12 durch die innere Schweißnaht 9.2 schneidet und zwar in dem Bereich, in dem die Schweißnaht 9.2 bereits in die untere Wärmetauscherplatte 1b eingedrungen ist. An der Schnittkante der Durchgangslöcher 4 ist dann kein Spalt mehr zu erkennen. Der Durchmesser X der Durchgangslöcher 4 kann aber auch kleiner sein als der Innendurchmesser der Schweißnaht 9, 9.2.

Die in Fig. 3 gezeigten Wärmetauscherplatten 1 a, 1b weisen Spannlöcher 3 auf. Wie bereits beschrieben, sind die Spannlöcher 3 nicht unbedingt notwendig. Sind keine Spannlöcher angebracht, so werden durch das Laserschneiden mit dem Schneidkopf 12 als erste Öffnungen die Durchgangslöcher 4 in die Wärmetauscherplatten 1a, 1b geschnitten.

Nachdem jeweils zwei Wärmetauscherplatten in der Nähe der Ränder 2 der Durchgangslöcher zu Wärmetauscherplattenpaaren miteinander verschweißt wurden, werden diese Wärmetauscherplattenpaare entlang des äußeren Rands 13 der Wärmetauscherplatten zu Plattenpaketen miteinander verschweißt.

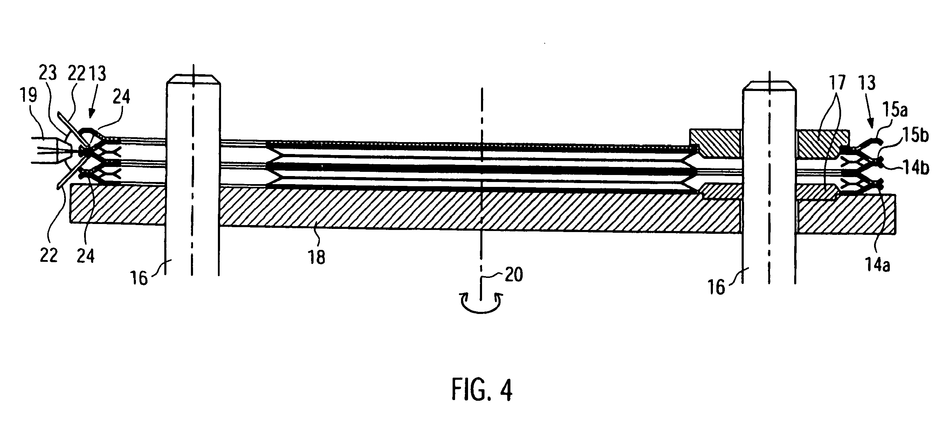

In Fig. 4 ist eine Schweißvorrichtung mit darin aufgespannten Wärmetauscherplattenpaaren 14a, 14b; 15a, 15b zum Verschweißen in ihren Randbereichen 13 gezeigt. Die Wärmetauscherplattenpaare 14a, 14b; 15a, 15b werden mithilfe von weiteren Zentrierstiften 16 und Zentrierbuchsen 17 zentriert und gegen eine Unterlage 18 verspannt. Mit einem Schweißkopf 19 wird im Randbereich 13 der Wärmetauscherplatten 14a und 15b der beiden Wärmetauscherplattenpaare 14a, 14b; 15a, 15b eine Schweißnaht 24 erzeugt. Dabei ist der Schweißkopf 19 feststehend, die gesamte Vorrichtung mit der Unterlage 18 und den darauf verspannten Wärmetauscherplattenpaaren 14a, 14b; 15a, 15b rotiert um die Achse 20. Vorzugsweise sind auf der Unterlage 18 mehr als zwei Wärmetauscherplattenpaare miteinander verspannt. Die auf der Unterlage 18 angeordneten Wärmetauscherplattenpaare werden dann der Reihe nach entlang ihrer Außenbereiche 13 miteinander verschweißt.

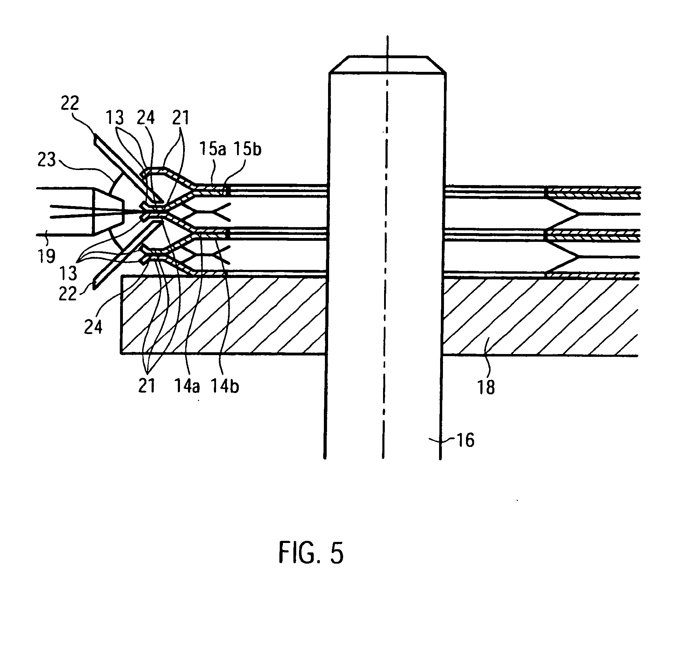

In Fig. 5 ist eine vergrößerte Darstellung der Randbereiche 13 der Wärmetauscherplattenpaare 14a, 14b; 15a, 15b mit dem Schweißkopf 19 dargestellt. Die Außenbereiche 13 der Wärmetauscherplatten 14a, 14b; 15a, 15b sind aufgebogen, so dass zwischen zwei Wärmetauscherplatten 14a, 15b von zwei aufeinander liegenden Wärmetauscherplattenpaaren 14a, 14b; 15a, 15b eine V-förmige Nut entsteht. Die an die V-förmige Nut anschließenden Bereiche 21 der Wärmetauscherplatten 14a, 14b; 15a, 15b sind wiederum flach und liegen flach aufeinander. Diese flachen Bereiche 21 werden mithilfe von zwei am Schweißkopf 19 befestigten linsenförmigen Spannelementen 22 zusammengedrückt. Ferner ist an dem Schweißkopf 19 eine Schutzglocke 23 angeordnet, die vor, während und nach dem Schweißprozess Schutzgas zuführt. Der Schweißkopf 19 ist auf die durch die aufgebogenen Ränder 13 erzeugte V-förmige Nut ausgerichtet und verschweißt die aufeinander liegenden Wärmetauscherplatten 14a, 15b im Bereich dieser V-förmigen Nut bzw. im Bereich der daran anschließenden flachen Bereiche 21 mit einer Bördelnaht 24 miteinander. Bei dem Schweißvorgang wird die gesamte Spannvorrichtung mit der Unterlage 18 um 360° um die Achse 20 gedreht, der Schweißkopf 19 steht still. Auch Wärmetauscherplattenpaare, die an den Durchgangslöchern nicht gemäß dem vorstehend beschriebenen Verfahren miteinander verbunden wurden, sondern auf andere Art und Weise, z.B. so wie bisher üblich, können so an den äußeren Rändern miteinander verschweißt werden.

Der Schweißkopf 19 kann sich in der V-förmigen Nut selbst zentrieren. Gleichzeitig kann eine optische Kontrolle der Schweißnaht in der V-förmigen Nut durchgeführt werden, wobei die Nahtsensorik die Lage der Schweißkehle in dieser V-förmigen Nut fehlerfrei erkennen und verfolgen kann.

Die Wärmetauscherplatten 14a, 14b; 15a, 15b können Prägungen aufweisen, die bereits vor dem Verschweißen der einzelnen Wärmetauscherplatten 14a, 14b; 15a, 15b zu den Wärmetauscherplattenpaaren erzeugt werden. Vorzugsweise werden die Ränder 13 der Wärmetauscherplatten 14a, 14b; 15a, 15b in dem Umformschritt aufgebogen, in dem auch die Prägungen in die Platten eingeprägt werden.

Sowohl die Schweißnähte 9, 9.1, 9.2 im Bereich 2 der Durchgangslöcher als auch die Schweißnähte in den Randbereichen 13 sind gasdicht.

Das Verschweißen der Wärmetauscherplatten miteinander erfolgt sowohl im Bereich der Durchgangslöcher als auch in den Außenbereichen vorzugsweise mit einem Laserschweißverfahren. Auch die Durchgangslöcher 4 werden vorzugsweise mit einem Laser geschnitten. Es kann dann ein Kopf für alle Schweiß- und Schneidschritte eingesetzt werden. Es ist aber auch denkbar, dass die Durchgangslöcher 4 anders hergestellt werden, beispielsweise durch Stanzen. Vorzugsweise sind sowohl die Durchgangslöcher als auch die Wärmetauscherplatten rund. Es sind aber auch andere Formen denkbar.

Durch das oben beschriebene Verfahren entsteht also ein vollverschweißtes Plattenpaket, das mindestens einen durch die Durchgangslöcher 4 gebildeten Durchgang aufweist und das in einen zusätzlichen Druckbehälter eingesetzt werden kann, aber auch als separater Druckbehälter funktionsfähig ist.

Der zusätzliche Druckbehälter weist ebenfalls einen Einlass und einen Auslass auf, so dass durch den Druckbehälter mit dem darin angeordneten Plattenpaket ein druckfester Plattenwärmetauscher mit zwei Räumen gleichen oder unterschiedlichen Drucks entsteht.

## Patentansprüche

1. Verfahren zum Verbinden von mindestens zwei Wärmetauscherplatten (1a, 1 b, 14a, 14b, 15a, 15b) zu einem, mindestens einen durch Durchgangslöcher (4) in den Wärmetauscherplatten (1a, 1b, 14a, 14b, 15a, 15b) gebildeten Durchgang aufweisendenden Plattenpaket für einen Wärmetauscher, wobei jeweils zwei Wärmetauscherplatten (1a, 1b, 14a, 14b, 15a, 15b) in der Nähe des Rands (2) des späteren Durchgangslochs (4) zusammengespannt und paarweise mit mindestens einer den Rand (2) des späteren Durchgangslochs (4) markierenden umlaufenden Schweißnaht (9) miteinander verschweißt werden, wobei der Durchmesser mindestens einer umlaufenden Schweißnaht (9) mindestens so groß ist, wie der Durchmesser (X) des späteren Durchgangslochs (4), **dadurch gekennzeichnet, dass** anschließend das Durchgangsloch (4) aus den miteinander verschweißten Wärmetauscherplatten geschnitten wird.

2. Verfahren nach Anspruch 1, **dadurch gekennzeichnet, dass** jede Wärmetauscherplatte (1a, 1b) ein innerhalb des Rands des späteren Durchgangslochs (4) angeordnetes Spannloch (3) aufweist, das nach dem Verschweißen der Wärmetauscherplatten (1 a, 1 b) miteinander zu dem Durchgangsloch (4) erweitert wird.

3. Verfahren nach einem der Ansprüche 1 oder 2, **dadurch gekennzeichnet, dass** in jede Wärmetauscherplatte (1a, 1b, 14a, 14b, 15a, 15b) mindestens zwei Durchgangslöcher (4) geschnitten werden.

4. Verfahren nach einem der Ansprüche 1 bis 3, **dadurch gekennzeichnet, dass** die jeweils zwei Wärmetauscherplatten (1 a, 1b) mittels zwei benachbarter, den Rand des späteren Durchgangslochs (4) markierender umlaufender Schweißnähte (9.1, 9.2) miteinander verschweißt werden.

5. Verfahren nach Anspruch 4, **dadurch gekennzeichnet, dass** sich die beiden Schweißnähte (9.1, 9.2) zumindest teilweise überlappen.

6. Verfahren nach einem der Ansprüche 1 bis 5, **dadurch gekennzeichnet, dass** jedes Durchgangsloch (4) in dem Bereich der umlaufenden Schweißnaht (9, 9.1, 9.2) in die Wärmetauscherplatten (1 a, 1b) geschnitten wird, in dem sich die Schweißnaht (9, 9.1, 9.2) in beide Wärmetauscherplatten (1 a, 1 b) erstreckt.

7. Verfahren nach einem der Ansprüche 1 bis 6, **dadurch gekennzeichnet, dass** die entstandenen Wärmetauscherplattenpaare (1a, 1b; 14a, 14b; 15a, 15b) entlang des äußeren Rands (13) der Wärmetauscherplatten mit einer Schweißnaht (24) miteinander verschweißt werden, wobei die äußeren Ränder (13) der Wärmetauscherplatten (1a, 1b, 14a, 14b, 15a, 15b) aufgebogen sind, so dass zwischen den äußeren Rändern (13) von je zwei Wärmetauscherplatten (14a, 15b) eine V-förmige Nut entsteht, die sich anschließenden Bereiche (21) der Wärmetauscherplatten (14a, 15b) flach aufeinander liegen und die Schweißnaht (24) in der V-förmigen Nut verläuft.

8. Verfahren nach Anspruch 7, **dadurch gekennzeichnet, dass** die Wärmetauscherplatten (14a, 14b; 15a, 15b) Prägungen aufweisen und die äußeren Ränder (13) der Wärmetauscherplatten (14a, 14b; 15a, 15b) bei dem Aufbringen der Prägungen aufgebogen werden.

9. Verfahren nach einem der Ansprüche 1 bis 8, **dadurch gekennzeichnet, dass** die Schweißnähte (9, 9.1, 9.2, 24) an den Wärmetauscherplatten (1a, 1b, 14a, 14b, 15a, 15b) durch Laserschweißen erzeugt werden.

## Claims

1. A method for connecting at least two heat exchanger plates (1 a, 1 b, 14a, 14b, 15a, 15b) so as to form a plate packet for a heat exchanger, said plate packet being provided with at least one passage defined by through holes (4) in the heat exchanger plates (1 a, 1 b, 14a, 14b, 15a, 15b), wherein two respective heat exchanger plates (1a, 1b, 14a, 14b, 15a, 15b) are clamped together in the proximity of the edge (2) of the future through hole (4), and that the respective heat exchanger plates (1 a, 1 b, 14a, 14b, 15a, 15b) are welded to one another in pairs with at least one circumferentially extending welding seam (9) marking the edge (2) of the future through hole (4), the diameter of at least one circumferentially extending welding seam (9) being at least as large as the diameter (X) of the future through hole (4), **characterized in that** the through hole (4) is subsequently cut out of the heat exchanger plates that have been welded together.

2. A method according to claim 1, **characterized in that** each heat exchanger plate (1a, 1 b) is provided with a fixing hole (3) which is arranged inside of the edge of the future through hole (4) and which is expanded so as to form the through hole (4) when the heat exchanger plates (1 a, 1 b) have been welded to one another.

3. A method according to one of the claims 1 or 2, **characterized in that** at least two through holes (4) are cut into each heat exchanger plate (1a, 1 b, 14a, 14b, 15a, 15b).

4. A method according to one of the claims 1 to 3, **characterized in that** the respective two heat exchanger plates (1 a, 1 b) are welded to one another by means of two neighbouring, circumferentially extending welding seams (9.1, 9.2) marking the edge of the future through hole (4).

5. A method according to claim 4, **characterized in that** the two welding seams (9.1, 9.2) overlap at least partially.

6. A method according to one of the claims 1 to 5, **characterized in that** each through hole (4) is cut into the heat exchanger plates (1 a, 1 b) in the area of the circumferentially extending welding seam (9, 9.1, 9.2) in which said welding seam (9, 9.1, 9.2) extends into both heat exchanger plates (1 a, 1 b).

7. A method according to one of the claims 1 to 6, **characterized in that** the resultant heat exchanger plate pairs (1 a, 1 b; 14a, 14b; 15a, 15b) are welded to one another along the outer margins (13) of the heat exchanger plates with a welding seam (24), said outer margins (13) of the heat exchanger plates (1 a, 1 b, 14a, 14b, 15a, 15b) being bent up so that a V-shaped groove is formed between the outer margins (13) of two respective heat exchanger plates (14a, 15b), the subsequent areas (21) of the heat exchanger plates (14a, 15b) are superimposed on one another and in planar contact with one another, and the welding seam (24) extends in the said V-shaped groove.

8. A method according to claim 7, **characterized in that** the heat exchanger plates (14a, 14b; 15a, 15b) are provided with embossments, and that the outer margins (13) of the heat exchanger plates (14a, 14b; 15a, 15b) are bent up during the application of these embossments.

9. A method according to one of the claims 1 to 8, **characterized in that** the welding seams (9, 9.1, 9.2, 24) on the heat exchanger plates (1a, 1b, 14a, 14b, 15a, 15b) are produced by means of laser welding.

## Revendications

1. Procédé de connexion d'au moins deux plaques d'échangeur de chaleur (1a, 1b, 14a, 14b, 15a, 15b) pour constituer un paquet de plaques pour échangeur de chaleur comportant au moins un passage constitué par des trous de passage (4) pratiqués dans les plaques d'échangeur de chaleur (1a, 1b, 14a, 14b, 15a, 15b), dans lequel les plaques d'échangeur de chaleur (1a, 1b, 14a, 14b, 15a, 15b) sont serrées par paires l'une contre l'autre à proximité du bord (2) du trou de passage pratiqué ultérieurement (4) et sont soudées entre elles deux à deux avec au moins un cordon de soudure circonférentiel (9) marquant le bord (2) du trou de passage pratiqué ultérieurement (4), dans lequel le diamètre d'au moins un cordon de soudure circonférentiel (9) est au moins aussi grand que le diamètre (X) du trou de passage pratiqué ultérieurement (4), **caractérisé en ce que** le trou de passage (4) est ensuite découpé dans les plaques d'échangeur de chaleur soudées entre elles.

2. Procédé selon la revendication 1, **caractérisé en ce que** chaque plaque d'échangeur de chaleur (1a, 1b) comporte un trou de serrage (3) agencé à l'intérieur du bord du trou de passage pratiqué ultérieurement (4), ledit trou de serrage étant élargi pour former le trou de passage (4) après le soudage des plaques d'échangeur de chaleur (1a, 1b) entre elles.

3. Procédé selon l'une des revendications 1 ou 2, **caractérisé en ce qu'**au moins deux trous de passage (4) sont découpés dans chaque plaque d'échangeur de chaleur (1a, 1b, 14a, 14b, 15a, 15b).

4. Procédé selon l'une des revendications 1 à 3, **caractérisé en ce que** les plaques d'échangeur de chaleur (1a, 1b) sont soudées entre elles par paires à l'aide de deux cordons de soudure circonférentiels voisins (9.1, 9.2) marquant le bord du trou de passage pratiqué ultérieurement (4) .

5. Procédé selon la revendication 4, **caractérisé en ce que** les deux cordons de soudure (9.1, 9.2) se chevauchent au moins partiellement.

6. Procédé selon l'une des revendications 1 à 5, **caractérisé en ce que** chaque trou de passage (4) est découpé dans les plaques d'échangeur de chaleur (1a, 1b) dans la zone du cordon de soudure circonférentiel (9, 9.1, 9.2), et **en ce que** le cordon de soudure (9, 9.1, 9.2) s'étend dans les deux plaques d'échangeur de chaleur (1a, 1b).

7. Procédé selon l'une des revendications 1 à 6, **caractérisé en ce que** les paires de plaques d'échangeur de chaleur obtenues (1a, 1b ; 14a, 14b ; 15a, 15b) sont soudées entre elles le long du bord externe (13) des plaques d'échangeur de chaleur à l'aide d'un cordon de soudure (24), moyennant quoi les bords externes (13) des plaques d'échangeur de chaleur (1a, 1b, 14a, 14b, 15a, 15b) sont courbés de manière à former une gorge en forme de V entre les bords externes (13) de chaque paire de plaques d'échangeur de chaleur (14a, 15b), **en ce que** des zones adjacentes (21) des plaques d'échangeur de chaleur (14a, 15b) se chevauchent à plat, et **en ce que** le cordon de soudure (24) s'étend dans la gorge en forme de V.

8. Procédé selon la revendication 7, **caractérisé en ce que** les plaques d'échangeur de chaleur (14a, 14b ; 15a, 15b) comportent des bossages et **en ce que** les bords externes (13) des plaques d'échangeur de chaleur (14a, 14b ; 15a, 15b) sont courbées par la formation des bossages.

9. Procédé selon l'une des revendications 1 à 8, **caractérisé en ce que** les cordons de soudure (9, 9.1, 9.2, 24) sont réalisés sur les plaques d'échangeur de chaleur (1a, 1b, 14a, 14b, 15a, 15b) par un procédé de soudage au laser.
